(19) Europäisches Patentamt
European Patent Office
Office européen des brevets

(11) **EP 2 635 396 B1**

(12) **FASCICULE DE BREVET EUROPEEN**

(45) Date de publication et mention de la délivrance du brevet:
**18.11.2020 Bulletin 2020/47**

(21) Numéro de dépôt: **11776437.3**

(22) Date de dépôt: **28.10.2011**

(51) Int Cl.:
***B23K 26/38*** (2014.01)     ***B23K 26/14*** (2014.01)
***B23K 26/06*** (2014.01)     ***G21D 1/00*** (2006.01)

(86) Numéro de dépôt international:
**PCT/EP2011/068964**

(87) Numéro de publication internationale:
**WO 2012/059420 (10.05.2012 Gazette 2012/19)**

(54) **PROCEDE OPTIMISE DE DECOUPE PAR LASER, VIS-A-VIS DE LA QUANTITE D'AEROSOLS**

HINSICHTLICH DER MENGE VON AEROSOLEN OPTIMIERTES LASERSCHNEIDVERFAHREN

LASER CUTTING METHOD OPTIMIZED IN TERMS OF THE AMOUNT OF AEROSOLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2010 FR 1058993**

(43) Date de publication de la demande:
**11.09.2013 Bulletin 2013/37**

(73) Titulaires:
• **Commissariat à l'Énergie Atomique et aux Énergies Alternatives 75015 Paris (FR)**
• **Institut de Radioprotection et de Sûreté Nucléaire 92260 Fontenay aux Roses (FR)**
Etats contractants désignés:
**FR**

(72) Inventeurs:
• **CHAGNOT, Christophe F-78140 Velizy-Villacoublay (FR)**
• **CANNEAU, Gaétan F-84000 Avignon (FR)**
• **PILOT, Guy F-78114 Magny Les Hameaux (FR)**
• **FAUVEL, Sylvain F-91440 Bures Sur Yvette (FR)**

(74) Mandataire: **Regimbeau 20, rue de Chazelles 75847 Paris Cedex 17 (FR)**

(56) Documents cités:
**JP-A- 2006 007 304**

• **DRYGALLA M ET AL: "Modularised laser beam cutting technology for dismantling applications", WELDING IN THE WORLD, ELSEVIER / INTERNATIONAL INSTITUTE OF WELDING, ROISSY, FR, vol. 51, no. 9/10, 1 septembre 2007 (2007-09-01), pages 17-23, XP001518959, ISSN: 0043-2288**
• **PAVELE L A: "EFFECTS OF THE ENERGY AND GAS-HYDRODYNAMIC PARAMETERS OF THE LASER CUTTING PROCESS ON THE FORMATION OF CUT SURFACES", WELDING INTERNATIONAL, TAYLOR & FRANCIS, ABINGDON, GB, vol. 20, no. 4, 1 janvier 2006 (2006-01-01), pages 316-321, XP001241590, ISSN: 0950-7116, DOI: DOI:10.1533/WINT.2006.3615**
• **RICERCHE A: "LASER BEAM CUTTING AND SEALING OF PIPING FROM HIGH-RISK PLANTS", WELDING INTERNATIONAL, TAYLOR & FRANCIS, ABINGDON, GB, vol. 9, no. 8, 1 janvier 1995 (1995-01-01), pages 629-633, XP000523783, ISSN: 0950-7116**
• **BÖHME ET AL: "Handbuch der Schweissverfahren, Teil 2", HANDBUCH DER SCHWEISSVERFAHREN, XX, XX, 1 janvier 1992 (1992-01-01), pages 174-175, XP002206753,**

**Description**

DOMAINE TECHNIQUE GENERAL

La présente invention concerne un procédé optimisé de découpe par laser d'une pièce d'un matériau par un système de découpe comportant

- une source laser de production d'un faisceau laser d'une certaine puissance, et
- une tête de découpe comportant une buse extrémale de passage du faisceau laser de découpe.

ETAT DE L'ART

On connaît une application des lasers pour la découpe de matériaux, notamment des métaux. On peut citer le document "Modularised laser beam cutting technology for dismantling applications" de Welding in the World, Elsevier, international Institue of Welding, Roissy, FR, vol.51, n° 9/10 paru en septembre 2007.On peut citer aussi "EFFECTS OF THE ENERGY AND GAS-HYDRODYNAMIC PARAMETERS OF THE LASER CUTTING PROCESS ON THE FORMATION OF CUT SURFACES" de Welding International, Taylor & Francis, Abingdon, GB, vol.20, n°4 paru en janvier 2006.
La découpe par laser est très efficace, mais produit trois types de résidus indésirables :

- des scories adhérentes à la surface du matériau découpé, c'est-à-dire des particules solides constituées par l'éjection de la matière en fusion de la saignée de découpe et ses composés formés par oxydoréduction ainsi que l'accumulation d'impuretés lors de la fusion du matériau découpé ;
- des scories sédimentées, c'est-à-dire des scories n'adhérant pas à la surface du matériau découpé et tombant par gravité ;
- des aérosols, c'est-à-dire des particules solides formées la projection et la vaporisation d'une partie de la matière de la découpe et la constitution de composés formés par oxydoréduction lors de la fusion du matériau découpé, mais restant en suspension dans un milieu gazeux ambiant, c'est-à-dire présentant une vitesse de chute négligeable.

La dispersion des scories sédimentées et des aérosols dans le milieu ambiant est difficilement contrôlable.
On comprend aisément que lorsque la découpe par laser est utilisée pour le démantèlement des installations nucléaires, les résidus sont encore plus indésirables, car ils contiennent des matériaux irradiés ou contaminés et par conséquent radioactifs.
Des dispositifs de collecte des aérosols comportant des filtres sont ainsi prévus. Cependant, les aérosols colmatent et irradient les filtres, qu'il faut ainsi remplacer souvent et traiter comme des déchets.
On souhaite notamment remplacer les filtres moins souvent.
Il n'existe à ce jour aucun procédé optimisé de découpe laser qui permette de limiter la production d'aérosols.

PRESENTATION DE L'INVENTION

L'invention propose de pallier au moins un de ces inconvénients.
A cet effet, on propose selon l'invention un procédé optimisé de découpe par laser d'une pièce d'un matériau par un système de découpe comportant

- une source laser de production d'un faisceau laser avec une puissance, et
- une tête de découpe comportant une buse extrémale de passage du faisceau laser de découpe,

le procédé étant caractérisé en ce qu'il comporte une étape de détermination d'une puissance Pd de découpe telle que

$$Pd = Max(Popt; \lambda e)$$

où Max est l'opérateur mathématique du maximum,
Popt est une puissance optimale du faisceau laser du système de découpe, déterminée en fonction
de la pièce à découper, et/ou
de paramètres de découpe et/ou
du type de système,

pour minimiser la quantité d'aérosols produits lors d'une découpe de la pièce (1),
$\lambda$ est un coefficient directeur représentant le nombre de kW nécessaires pour la découpe de la pièce par mm d'épaisseur de pièce, et
e est l'épaisseur de la pièce, en mm.

L'invention est avantageusement complétée par les caractéristiques suivantes, prises seules ou en une quelconque de leur combinaison techniquement possible :

- la détermination de Popt est effectuée grâce à un quadruplet prédéterminé de constantes ($\alpha$ ; $\beta$ ; $\gamma$ ; $\delta$) représentatif du type de système de découpe, tel que :

$$Popt = \alpha \cdot DB + \beta \cdot e + \gamma \cdot k + \delta$$

où DB est le diamètre de la buse, en millimètres,
e est l'épaisseur de la pièce, en millimètres, et
k est le coefficient de vitesse limite de la tête de découpe, à savoir le rapport entre la vitesse courante de découpe et la vitesse limite de découpe de la pièce ;

- le quadruplet prédéterminé de constantes ($\alpha$ ; $\beta$ ; $\gamma$ ; $\delta$), représentatif d'un système de découpe comportant une source laser du type grenat d'yttrium-aluminium YAG pour un faisceau laser ayant une longueur d'onde de l'ordre de 1 $\mu$m, est
(-0,14 ; 0,07 ; -1,12, 5,64).
- le procédé comporte une étape initiale de détermination d'une expression de la puissance du faisceau laser en fonction de la pièce à découper, et/ou de paramètres de découpe, et/ou du type de système, étape initiale selon laquelle :
- le système effectue une pluralité de découpes d'essai d'une pièce en faisant varier la puissance du faisceau, et/ou la pièce à découper, et/ou des paramètres de découpe et/ou le type de système ;
- un capteur effectue une pluralité de mesures correspondantes de la quantité d'aérosols produits lors de chaque découpe d'essai de la pièce,
- un calculateur

exprime la quantité d'aérosols produits lors de chaque découpe d'essai de la pièce en fonction de la puissance du faisceau, et/ou de la pièce à découper, et/ou des paramètres de découpe et/ou du type de système ;
effectue une dérivée partielle de l'expression de la quantité d'aérosols produits, par rapport à la puissance du faisceau laser, et détermine l'expression permettant d'annuler ladite dérivée partielle en fonction de la pièce à découper, et/ou des paramètres de découpe et/ou le type de système.

L'invention présente de nombreux avantages.
La dispersion des aérosols dans le milieu ambiant est plus facilement contrôlable et réduite, ce qui est avantageux dans le cas où la découpe par laser est utilisée pour le démantèlement des installations nucléaires. On réduit ainsi le nombre de filtres nécessaires, et par conséquent le nombre de déchets.
La puissance est toujours choisie pour que la découpe soit effectuée.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente un système de découpe ;
- la figure 2 représente les sous-étapes principales d'un procédé selon l'invention ;
- les figures 3 représentent l'effet du diamètre DB de buse sur la production d'aérosols en fonction de la puissance du faisceau laser, pour des coefficients k de vitesse de 0,1, 0,5 et 0,7 (la distance buse-pièce H = 30 mm), pour un DB égal à 3 mm et 6 mm pour une épaisseur découpée de 10 mm ;
- les figures 4 représentent l'effet du diamètre DB de buse sur la production d'aérosols en fonction de la puissance du faisceau laser, pour des coefficients k de vitesse de 0,1, 0,5 et 0,7 (H = 30 mm), pour un DB égal à 3 et 6 mm pour une épaisseur découpée de 30 mm ;

- les figures 5 représentent l'effet de la puissance du laser sur la production d'aérosols en fonction de l'épaisseur e de la pièce, pour des coefficients k de vitesse de 0,1, 0,5 et 0,7 (H = 30 mm) pour un DB égal à 3 mm ;
- les figures 6 représentent l'effet de la puissance du laser sur la production d'aérosols en fonction de l'épaisseur e de la pièce, pour des coefficients k de vitesse de 0,1, 0,5 et 0,7 (H = 30 mm) pour un DB égal à 6 mm ;
- les figures 7 représentent l'effet de la puissance du laser sur la production d'aérosols en fonction des coefficients k de vitesse, pour des épaisseurs e de 10 et 30 mm (H = 30 mm) pour un DB égal à 3 mm;
- les figures 8 représentent l'effet de la puissance du laser sur la production d'aérosols en fonction des coefficients k de vitesse, pour des épaisseurs e de 10 et 30 mm (H = 30 mm) pour un DB égal à 6 mm; et
- les figures 9 représentent l'effet de la puissance du laser sur la production d'aérosols en fonction de l'épaisseur e de la pièce, pour des coefficients de vitesse de 0,5 et 0,7 (H = 30 mm, DB = 3 mm).

Sur l'ensemble des figures, les éléments similaires portent des références identiques.

DESCRIPTION DETAILLEE

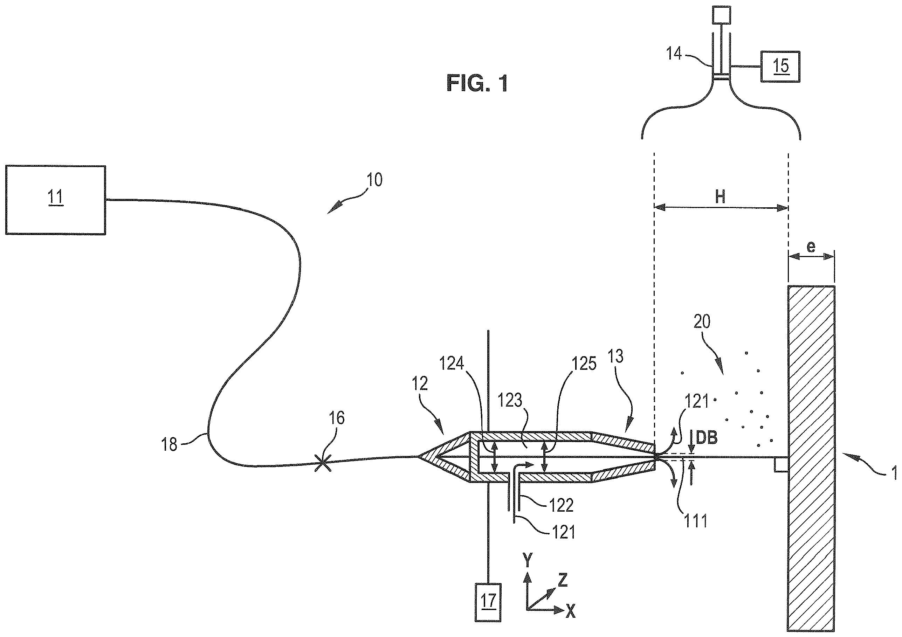

La figure 1 représente un système 10 de découpe comportant principalement

- une source 11 laser de production d'un faisceau 111 laser présentant une puissance, pour la découpe d'une pièce 1 d'une certaine épaisseur e, et
- une tête 12 de découpe comportant une buse 13 extrémale de passage du faisceau 111 laser de découpe.

La pièce 1 est représentée plane, mais peut également avoir un profil quelconque, par exemple courbe.
Le faisceau 111 doit avoir typiquement une puissance de 1kW par cm (10 mm) d'épaisseur de pièce à couper, notamment pour un acier inoxydable.
Le diamètre de la buse 13 est référencé par DB. Il est en général de 3 mm ou de 6 mm, mais d'autres valeurs sont bien entendu possibles.
La source 11 est reliée à la tête par deux fibres optiques. La première, située à l'extérieur du chantier ou de la cellule de démantèlement, n'est pas contaminable, contrairement à la seconde, située à l'intérieur du chantier. Les deux fibres sont reliées grâce un coupleur 16 optique. Chaque fibre est dotée à chacune de ses extrémités d'un connecteur qui permet son démontage : de la source, du coupleur et de la tête optique. Le remplacement de la tête 12 et de la seconde fibre est ainsi facilité, notamment lorsque la tête 12 ou la fibre a été utilisée pour le démantèlement des installations nucléaires, et est donc susceptible d'être radioactive par contamination.
La fibre 18 peut être d'une longueur quelconque, mais est en général d'une longueur de 100 m de la source 11 jusqu'au coupleur 16 (pour un diamètre de 400 $\mu$m par exemple), et de 20 m du coupleur 16 à la tête 12 (pour un diamètre de 600 $\mu$m par exemple).
La position de découpe du faisceau 111 est préférentiellement à angle droit par rapport à la pièce 1 à découper, par exemple à l'horizontal. La distance H entre l'extrémité de la buse 13 et la pièce 1 peut être de différentes valeurs, mais est en général comprise entre 5 et 30 mm, en fonction de la puissance du faisceau 111 et d'une épaisseur e de la pièce.
La tête 12 peut être déplacée selon les cinq axes (trois translations et deux rotations) pour effectuer la découpe, grâce à un actionneur 17 (typiquement un robot cinq axes ou un télé-manipulateur).
Le déplacement de la tête 12 se déroule avec une certaine vitesse V de découpe courante, lors d'une découpe. On comprend qu'il faille un certain temps pour découper une épaisseur e d'une pièce 1, pour une puissance du faisceau 111 donnée: si la tête 12 se déplace trop rapidement par rapport à la pièce 1, la découpe n'est pas effectuée correctement sur toute l'épaisseur e. On appelle la vitesse limite $V_L$ de découpe la vitesse au-delà de laquelle la pièce 1 n'est pas découpée.
La vitesse limite $V_L$ n'est en pratique jamais atteinte sur un chantier de démantèlement, pour assurer une marge de sécurité et garantir la découpe de la pièce.
On définit ainsi un coefficient k, appelé coefficient de vitesse limite de la tête 12 de découpe, comme le rapport entre la vitesse courante de découpe et la vitesse limite de découpe de la pièce 1, soit :

$$k = \frac{V}{V_L} \, .$$

k prend en général les valeurs 0,5 ou 0,7 sur les chantiers, mais peut avoir une valeur quelconque inférieure à 1 en fonction de la marge de sécurité souhaitée.
De manière classique, la tête 12 comporte une chambre interne 123 et une arrivée 122, latérale en général, de gaz 121 sous pression et remplissant la chambre 123. La buse 123 laisse ainsi également échapper le gaz 121 sous pression entourant le faisceau 111. Le gaz 121 permet d'évacuer le matériau de la pièce 1, fondu et vaporisé par le faisceau 111 et peut contribuer au refroidissement de la tête optique Le gaz 121 est en général de l'air. Un débit de passage de gaz 121 est de l'ordre de 400 L/min.

La chambre 123 comporte une lentille 124 de collimation du faisceau 111 et une lentille 125 de focalisation du faisceau 111. La distance focale de la lentille 124 de collimation peut être de 80 mm par exemple, et la distance focale de la lentille 125 de focalisation peut être de 253 mm par exemple.

Lors de la découpe de la pièce 1 par le faisceau 111, il y a production d'une quantité d'aérosols 20.

## PRINCIPE GENERAL DE L'INVENTION

L'invention permet de minimiser la quantité d'aérosols 20 produits lors d'une découpe de la pièce 1, en déterminant une puissance Popt optimale du faisceau 111 laser du système 10 de découpe.

A cet effet, la puissance Popt optimale du faisceau 111 laser du système 10 de découpe est exprimé, dans une expression, en fonction

- de la pièce 1 à découper, et/ou
- de paramètres de découpe, et/ou
- du type de système 10,

pour minimiser la quantité d'aérosols 20 produits lors d'une découpe de la pièce 1.

La pièce 1 est par exemple représentée dans l'expression précitée par la valeur e de l'épaisseur de la pièce, mais pourrait par exemple être également représentée par un autre paramètre représentatif de la pièce, comme le type de matériau et/ou d'alliage composant la pièce (acier inoxydable de type 304 L ou 316 L par exemple).

Les paramètres de découpe dans l'expression précitée sont par exemple

- la distance H entre la buse 13 et la pièce 1, ou
- le coefficient k, ou également par exemple
- le diamètre d'impact du faisceau.

Le type de système est par exemple représenté dans l'expression précitée par le diamètre DB, lié au débit de gaz 121, mais d'autres paramètres pourraient également être pris en compte, comme

- le débit de gaz,
- la nature du gaz,
- la pression d'arrêt à la surface de la pièce 1, ou
- le type de fibre optique.

La pression d'arrêt est liée à l'énergie cinétique du gaz 121 et résulte du débit de gaz 121, du diamètre DB et de la géométrie de la buse 13, ainsi que de la distance H.

Une pression d'arrêt minimale est nécessaire pour assurer la découpe. Ainsi, pour un diamètre d'impact du faisceau laser sur la pièce compris entre 2 et 4 mm, une pression de 0.08 bar est nécessaire pour découper 10 mm d'acier inoxydable. Dans la pratique, 0.25 bar est une valeur qui assure une robustesse satisfaisante pour des épaisseurs de pièce inférieures à 80 mm. Une pression de 0.8 bar permet de découper des pièces d'acier inoxydable jusqu'à 100 mm.

Une pression d'arrêt plus élevée améliore certes la productivité de la découpe, en fournissant une vitesse limite plus élevée pour la même puissance (une pression de 0.8 bar permet ainsi de doubler la vitesse limite de découpe obtenue avec la pression d'impact de 0.25 bar pour les épaisseurs comprise en 20 et 80 mm), mais elle diminue la part de scories adhérentes au profit des scories sédimentées et des aérosols en favorisant l'évacuation de la matière fondue et des scories qui se forment à l'intérieur de la découpe.

La valeur de 0.25 est ainsi préconisée pour les épaisseurs inférieures à 80 mm et la valeur de 0.8 bar est préconisée pour les épaisseurs de 80 à 100 mm ou de 20 à 80 mm si une productivité accrue est requise.

## PRINCIPE GENERAL DE DETERMINATION DE LA PUISSANCE

Afin de pouvoir déterminer la puissance Popt, on comprend qu'il est nécessaire de passer par une étape initiale de détermination de l'expression de la puissance en fonction de la pièce 1 à découper, et/ou de paramètres de découpe, et/ou du type de système 10.

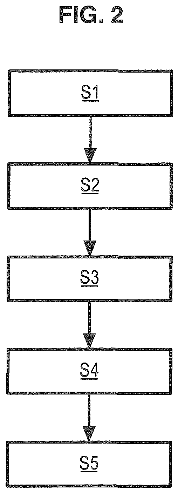

Selon l'étape initiale de détermination représentée de façon schématique sur la figure 2, le système 10 effectue, lors d'une étape S1, une pluralité de découpes d'essai d'une pièce 1 en faisant varier la puissance du faisceau 111, et/ou la pièce 1 à découper, et/ou des paramètres de découpe et/ou le type de système 10.

Lors de l'étape S1, le système 10 effectue ainsi des découpes avec par exemple :

- différentes valeurs de puissances du faisceau 111, et/ou
- différentes valeurs d'épaisseurs e de pièce 1, et/ou
- différentes valeurs de k, et/ou
- différentes valeurs de H, et/ou
- différentes valeurs de DB.

Lors d'une étape S2 un capteur 14 effectue une pluralité de mesures correspondantes de la quantité d'aérosols 20 produits lors de chaque découpe d'essai de la pièce 1.

Le capteur 14 utilisé lors de l'étape S2 comporte notamment un circuit d'extraction par aspiration, un filtre pour la récupération des aérosols 20, et un dispositif de mesure de la quantité d'aérosols prélevés.

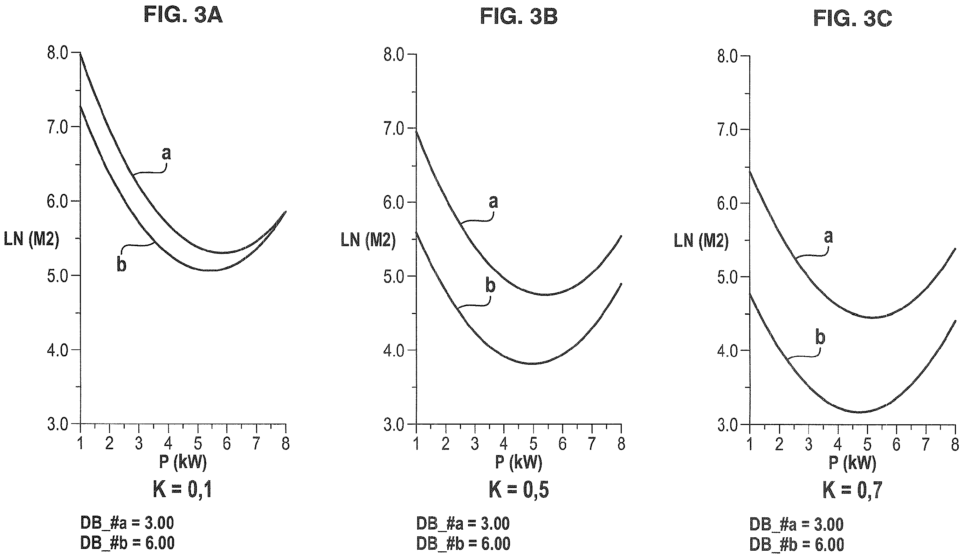

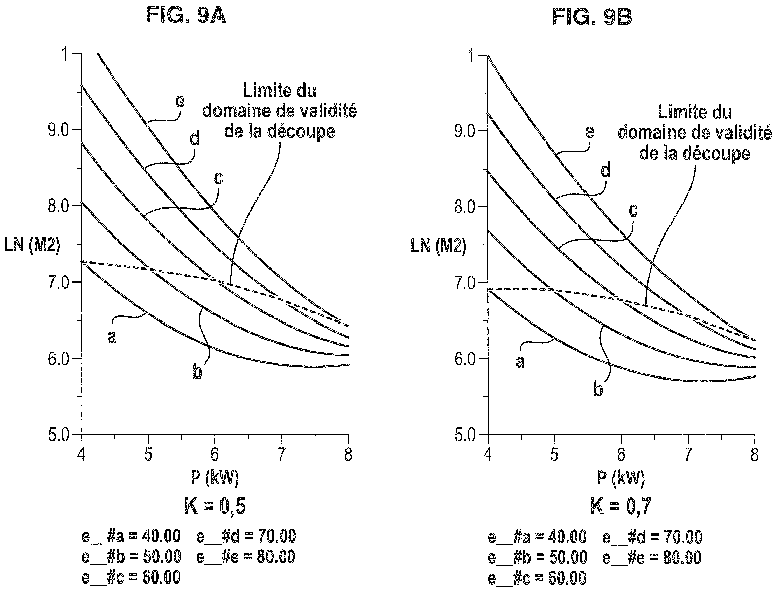

Un calculateur 15 connu de l'homme du métier, comportant tous les moyens classiques de mémoire et de traitement, et relié au capteur 14, permet de tracer les courbes des figures 3 aux figures 9, représentant de manière générale l'évolution de la quantité d'aérosols produits en fonction de la puissance du faisceau 111. Les courbes des figures 3 aux figures 9 sont décrites plus en détail dans la suite de la présente description.

Les inventeurs ont constaté que les courbes des figures 3 aux figures 9 montrent que la quantité d'aérosols 20 est minimale pour une certaine puissance, appelée Popt dans la présente description.

Des étapes S3 et S4 permettent donc de déterminer Popt en fonction des mesures du capteur 14.

A cet effet, lors de l'étape S3, le calculateur 15 exprime la quantité, par exemple notée M, d'aérosols 20 produits lors de chaque découpe d'essai de la pièce 1 en fonction de la puissance du faisceau 111, et/ou de la pièce 1 à découper, et/ou des paramètres de découpe et/ou du type de système 10.

Si les paramètres pris en compte sont la puissance P, l'épaisseur e, le coefficient k, la distance H et le diamètre de buse DB, on obtient grâce au calculateur 15 une expression du type :

$$M = f(P, e, k, H, DB) \text{ (E1)}$$

Pour trouver l'expression E1, le calculateur 15 effectue ainsi la construction d'un modèle mathématique en fonction des mesures issues du capteur 14, en utilisant une pluralité de régressions, par exemple linéaire, logarithmique, carrée, ou autre, et garde l'expression donnant le modèle le plus proche des mesures, c'est-à-dire donnant un coefficient connu de corrélation mathématique $R^2$, entre les mesures et les valeurs données par le modèle, tel que par exemple :

$$R^2 > 0,9.$$

La quantité M d'aérosols produits peut en réalité être exprimée en masse surfacique M2, c'est-à-dire la masse d'aérosols 20 en fonction de l'épaisseur de la pièce et par mètre de pièce découpé, exprimée en $g/m^2$. La connaissance de M2 est susceptible d'intéresser en premier chef les opérateurs des chantiers de démantèlement. Elle est donc avantageusement choisie pour ajuster les modèles.

La quantité M d'aérosols produits peut également être exprimée par exemple en masse linéique M1, c'est-à-dire la masse d'aérosols 20 produits par unité de longueur de pièce découpée, entraînée dans le circuit d'extraction du capteur 14 et mesurée par le capteur 14, exprimée en g/m.

On connaît la relation entre M1 et M2 :

$$M_2 = \frac{10^3 . M_1}{e}$$

Les études montrent que les résultats suivent une évolution identique que les mesures soient faites soit en M1 ou en M2.

Etant donné que les courbes des figures 3 à 9 montrent que la quantité M (que ce soit M1 ou M2) en fonction de la puissance comporte un minimum, le calculateur 15 trouve ce minimum en annulant, lors de l'étape S4, une dérivée partielle de l'expression (E1) de la quantité d'aérosols 20 produits par rapport à la puissance du faisceau laser. On sait alors que l'annulation de la dérivée partielle correspond au minimum de P.

Le calculateur 15 effectue donc tout d'abord :

$$\frac{\partial M}{\partial P} = \frac{\partial}{\partial P} f(P, e, k, H, DB) \quad \text{(E2)}$$

Le calculateur 15 détermine ensuite également lors de l'étape S4 l'expression permettant d'annuler ladite dérivée partielle en fonction de la pièce 1 à découper, et/ou des paramètres de découpe et/ou le type de système 10. On sait alors que l'annulation de la dérivée partielle correspond à l'optimum de P.

Le calculateur 15 effectue donc :

$$\frac{\partial M}{\partial P} = 0$$

pour trouver l'expression de P minimisant la quantité d'aérosols produits.

EXEMPLE DE DETERMINATION

Lors de l'étape S1, le système 10 effectue une pluralité de découpes d'essai d'une pièce 1 d'épaisseur e, avec un diamètre DB de la buse 13 et un coefficient k de vitesse limite de la tête 12 de découpe.

Le système 10 utilisé comporte une source 11 laser du type grenat d'yttrium-aluminium YAG, par exemple à disque, pouvant produire un faisceau 111 laser ayant une longueur d'onde de l'ordre de 1 $\mu$m.

Lors des découpes, la puissance P du faisceau 111 laser est variable de 1 à 8 kW (des puissances de 3 kW, 5 kW et 8 kW sont par exemple utilisées), en tenant compte du fait qu'il est nécessaire, pour qu'il y ait découpe, de disposer d'environ 1 kW pour chaque cm d'épaisseur de la pièce.

Le débit de gaz 121 a été maintenu constant égal à 400 L/min lors de la pluralité de découpes.

La pièce 1 à découper est une pièce en acier inoxydable 316 L (référence norme AFNOR : X2 Cr Ni Mo 18-10 1.4404) d'épaisseur e, représentative des éléments constitutifs d'une installation nucléaire à démanteler. Lors des découpes d'essai, l'épaisseur e varie par exemple de 10 mm à 80 mm.

Lors des découpes d'essai, les diamètres DB prennent les valeurs 3 mm ou 6 mm.

Les valeurs 0,1 ; 0,25 ; 0,5 et 0,7 sont prises pour k.

A titre d'information, les valeurs de $V_L$ sont reprises dans les tableaux 1 et 2 suivants, pour une pièce inox 316L - H 30 mm - Débit 400 L/min : vitesse limite (mm/min).

Tableau 1 - Vitesses limites de découpe pour la buse de DB 3 mm.

| e (mm) | VL 8KW | VL 6KW | VL 4KW | VL 3KW | VL 2KW |
|---|---|---|---|---|---|
| 100 | 7,5 | | | | |
| 80 | 20 | | | | |
| 60 | 40 | 20 | | | |
| 40 | 125 | 75 | 20 | | |
| 30 | 200 | 125 | 75 | 40 | |
| 20 | 450 | 300 | 175 | 100 | 20 |
| 10 | 1200 | 900 | 600 | 400 | 200 |

Tableau 2 - Vitesses limites de découpe pour la buse de DB 6 mm.

| e (mm) | VL 8KW | VL 6KW | VL 4KW | VL 3KW | VL 2KW |
|---|---|---|---|---|---|
| 100 | | | | | |
| 80 | 10 | | | | |
| 60 | 30 | 15 | | | |
| 40 | 75 | 60 | 10 | | |
| 30 | 175 | 125 | 50 | 20 | |

(suite)

| e (mm) | VL 8KW | VL 6KW | VL 4KW | VL 3KW | VL 2KW |
|---|---|---|---|---|---|
| 20 | 350 | 250 | 125 | 70 | 10 |
| 10 | 1000 | 800 | 600 | 400 | 200 |

Le tableau 3 ci-après résume les mesures du capteur 14.

Tableau 3

| N° dans le plan | Diamètre Buse | Puissance Laser | Epaisseur plaque | Distance plaquecol | Vitesse de découpe | | Masse linéique d'aérosol | | Masse surfacique d'aérosol | | Masse linéique $H_2$ | | Volume scories adhérentes | Défaut de masse de la plaque | |
|---|---|---|---|---|---|---|---|---|---|---|---|---|---|---|---|
| | DB | P | e | H | k | $V_R$ | $M_1$ | IC $(M_1)$ | $M_2$ | IC $(M_2)$ | $[H_2]$ | IC$([H_2])$ | v | $M_P$ | IC $(M_P)$ |
| | mm | kW | mm | mm | - | m/min | g/m | g/m | g/m² | g/m² | mg/m | mg/m | cm³/m | g/m | g/m |
| 0 | 3 | 2,1 | 10 | 30 | 0,50 | 0,109 | 2,26 | 0,22 | | | 9,0 | 1,9 | 16,7 | 110 | 2 |
| 1 | 3 | 3 | 10 | 30 | 0,25 | 0,109 | 3,55 | 0,25 | 359 | 25 | 11,7 | 3,1 | 16,9 | 153 | 4 |
| 2 | 6 | 3 | 10 | 15 | 0,48 | 0,179 | 1,27 | 0,09 | 128 | 9 | 4,6 | 1,9 | 35,1 | 64 | 4 |
| 3 | 3 | 8 | 10 | 15 | 0,50 | 0,477 | 4,10 | 0,28 | 415 | 29 | 13,6 | 2,4 | 2,3 | 179 | 4 |
| 4 | 6 | 8 | 10 | 30 | 0,25 | 0,249 | 2,23 | 0,16 | 226 | 16 | 7,9 | 2,3 | 16,5 | 169 | 4 |
| 4 | 6 | 8 | 10 | 30 | 0,25 | 0,249 | 2,25 | 0,16 | 228 | 16 | 7,5 | 2,2 | 24,8 | 193 | 4 |
| 4 | 6 | 8 | 10 | 30 | 0,25 | 0,249 | 2,39 | 0,17 | 242 | 17 | 4,5 | 2,0 | 26,2 | 185 | 4 |
| 4 | 6 | 8 | 10 | 30 | 0,25 | 0,249 | 2,34 | 0,16 | 237 | 17 | 4,7 | 2,0 | | 171 | 4 |
| 5 | 3 | 3 | 20 | 30 | 0,49 | 0,044 | 12,5 | 0,9 | 611 | 42 | 31,6 | 6,0 | 17,5 | 292 | 7 |
| 5 | 3 | 3 | 20 | 30 | 0,49 | 0,044 | 10,9 | 0,8 | 534 | 37 | 24,2 | 6,7 | 37,2 | 275 | 10 |
| 6 | 6 | 3 | 20 | 15 | 0,25 | 0,015 | 12,2 | 0,9 | 595 | 43 | 5,2 | 6,2 | 91,9 | 106 | 20 |
| 7 | 3 | 8 | 20 | 15 | 0,24 | 0,109 | 8,84 | 0,88 | 432 | 43 | 19,8 | 5,8 | 20,9 | 393 | 10 |
| 8 | 6 | 8 | 20 | 30 | 0,50 | 0,199 | 2,90 | 0,20 | 141 | 10 | 6,2 | 2,9 | 126,0 | 276 | 6 |
| 8 | 6 | 8 | 20 | 30 | 0,50 | 0,199 | 3,41 | 0,24 | 167 | 12 | 5,0 | 2,9 | 148,5 | 247 | 6 |
| 9 | 3 | 8 | 30 | 30 | 0,25 | 0,056 | 15,7 | 1,1 | 504 | 37 | 13,7 | 8,3 | 58.0 | 586 | 22 |
| 10 | 3 | 8 | 60 | 30 | 0,24 | 0,010 | 32,4 | 3,3 | 533 | 55 | 27,9 | 19,3 | | 1336 | 42 |
| 11 | 3 | 8 | 30 | 30 | 0,49 | 0,109 | 10,6 | 0,7 | 340 | 24 | 20,9 | 6,1 | 15,3 | 692 | 11 |
| 11 | 3 | 8 | 30 | 30 | 0,49 | 0,109 | 10,0 | 0,7 | 322 | 23 | 20,0 | 5,5 | 22,1 | 662 | 10 |
| 12 | 3 | 8 | 60 | 30 | 0,50 | 0,021 | 33,8 | 2,4 | 556 | 40 | 67,3 | 14,9 | 135,3 | 925 | 22 |
| 13 | 3 | 8 | 80 | 30 | 0,57 | 0,010 | 40,4 | 2,9 | 504 | 38 | 59,7 | 22,5 | | 1576 | 45 |
| 14 | 3 | 5 | 30 | 30 | 0,70 | 0,070 | 8,41 | 0,59 | 270 | 19 | 16,2 | 6,1 | 85,4 | 390 | 10 |
| 15 | 3 | 8 | 30 | 30 | 0,71 | 0,159 | 6,47 | 0,37 | 208 | 12 | 19,7 | 6,5 | 11,0 | 657 | 11 |
| 17 | 3 | 8 | 60 | 30 | 0,71 | 0,030 | 32,5 | 1,9 | 534 | 31 | 62,7 | 15,0 | 99,0 | 1162 | 24 |

(suite)

| N° dans le plan | Diamètre Buse | Puissance Laser | Epaisseur plaque | Distance plaquecol | Vitesse de découpe | | Masse linéique d'aérosol | | Masse surfacique d'aérosol | | Masse linéique H$_2$ | | Volume scories adhérentes | Défaut de masse de la plaque | |
|---|---|---|---|---|---|---|---|---|---|---|---|---|---|---|---|
| | DB | P | e | H | k | V$_R$ | M$_1$ | IC (M$_1$) | M$_2$ | IC (M$_2$) | [H$_2$] | IC([H$_2$]) | v | M$_P$ | IC (M$_P$) |
| | mm | kW | mm | mm | - | m/min | g/m | g/m | g/m$^2$ | g/m$^2$ | mg/m | mg/m | cm$^3$/m | g/m | g/m |
| 18 | 6 | 8 | 20 | 30 | 0,09 | 0,035 | 9,64 | 0,69 | 471 | 34 | 4,0 | 5,8 | 104,5 | 79 | 19 |
| 19 | 6 | 8 | 10 | 30 | 0,50 | 0,497 | 1,38 | 0,10 | 140 | 10 | 2,9 | 1,8 | 48,7 | 105 | 4 |
| 20 | 6 | 3 | 10 | 30 | 0,50 | 0,189 | 0,55 | 0,04 | 56 | 4 | 2,8 | 1,8 | 36,5 | 53 | 4 |
| 21 | 6 | 3 | 10 | 10 | 0,11 | 0,040 | 4,91 | 0,34 | 497 | 35 | 3,2 | 4,3 | 18,1 | 82 | 9 |
| 22 | 6 | 3 | 10 | 30 | 0,11 | 0,040 | 2,86 | 0,21 | 290 | 21 | 0,0 | | 43,3 | 53 | 10 |
| 23 | 3 | 8 | 60 | 15 | 0,24 | 0,010 | 43,7 | 3,2 | 719 | 55 | 27,6 | 19,0 | | 1259 | 43 |
| 25 | 6* | 3 | 10 | 0 | 0,11 | 0,040 | 4,75 | 0,33 | 481 | 34 | 4,5 | 4,9 | | 47 | 9 |

Lors de l'étape S2, le calculateur 15 construit les courbes des figures 3 à 9, en fonction des mesures issues du capteur 14 et du tableau 3 pour les découpes de l'étape S1.

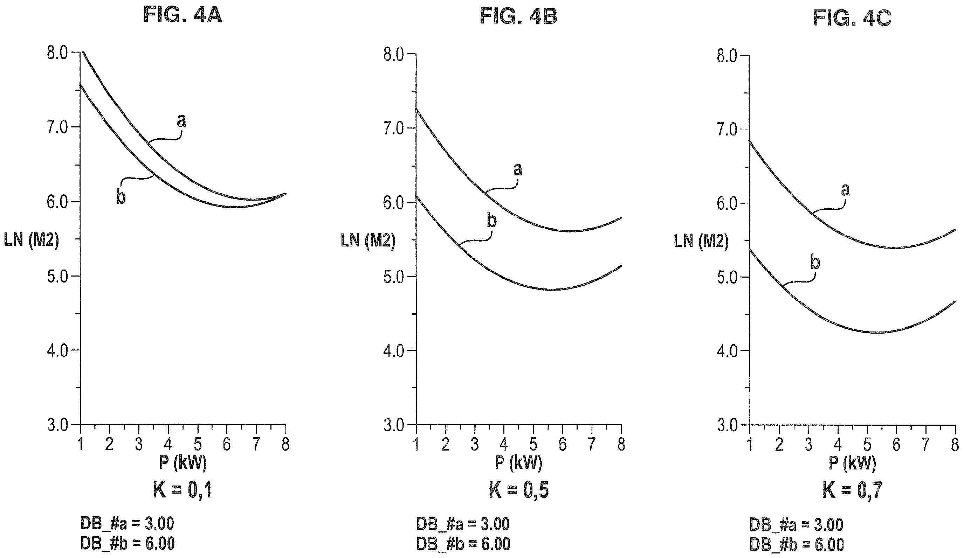

Les figures 3 et les figures 4 montrent des courbes représentant l'évolution de la quantité d'aérosols produits (exprimé par le logarithme LN de la masse surfacique M2 d'aérosols produits (en ordonnée)) en fonction de l'interaction entre la puissance du faisceau 111 laser P (en abscisse) et le diamètre de la buse DB, pour trois coefficients de vitesse k (0,1, 0,5 et 0,7) et deux épaisseurs e (10mm pour les figures 3 et 30 mm pour les figures 4).

L'effet quadratique de la puissance est bien visible sur les figures 3 et les figures 4, avec une quantité minimale d'aérosols produits qui n'est pas la même pour les deux diamètres de buse. L'effet du diamètre de buse est d'autant plus important que le coefficient de vitesse est élevé (k = 0,7). A vitesse faible (k = 0,1) et puissance maximale (P = 8 kW), il n'y a pas de différence entre les deux buses. Le coefficient de vitesse k agit sur la quantité d'aérosol produit et on observe un déplacement de la puissance optimale qui diminue lorsque k augmente.

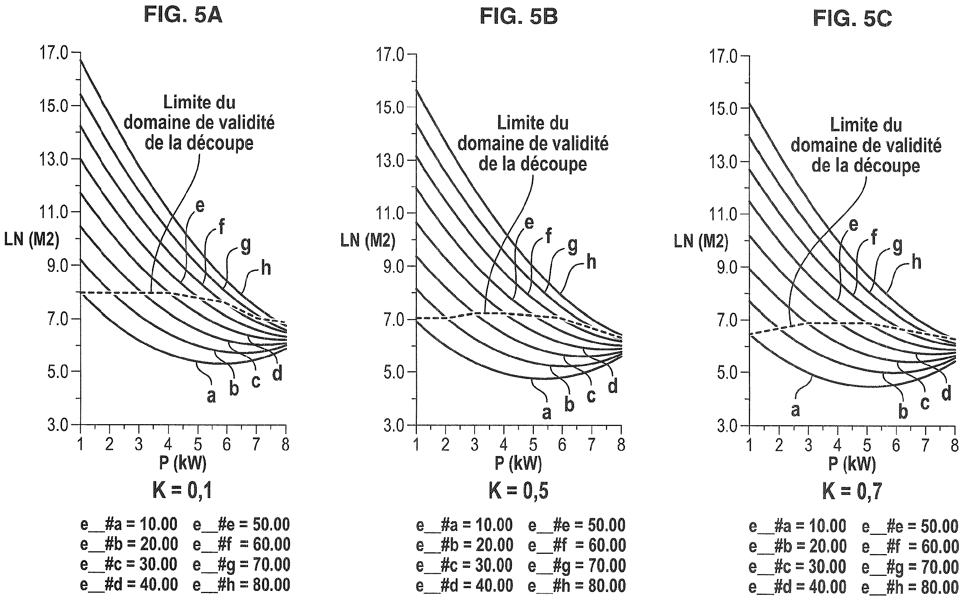

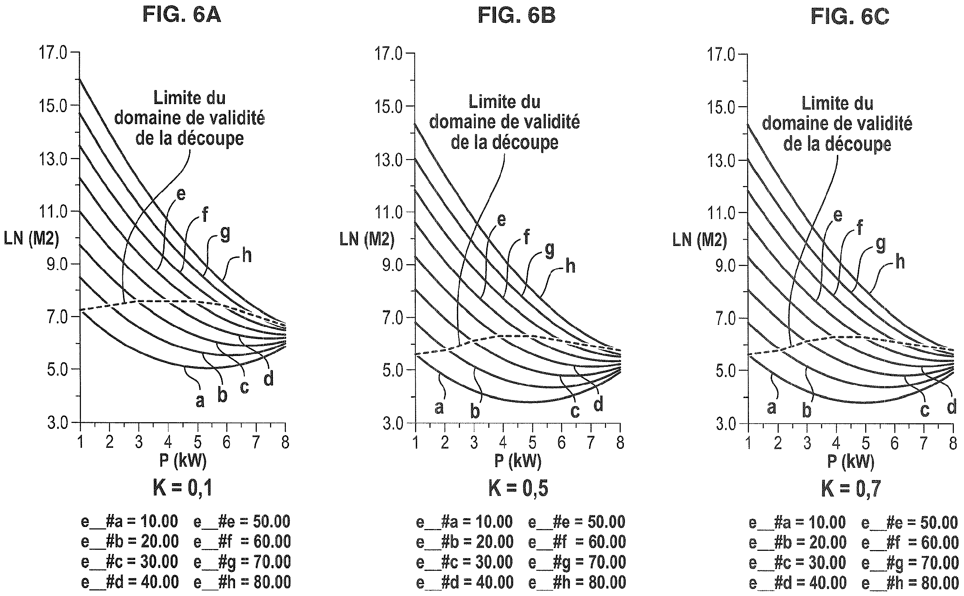

Les figures 5 et les figures 6 montrent des courbes représentant l'évolution de la quantité d'aérosols produits (exprimé par le logarithme LN de la masse surfacique M2 d'aérosols produits (en ordonnée)) en fonction de l'interaction entre la puissance du faisceau 111 laser P (en abscisse) et l'épaisseur de la pièce e (faisceau de courbes a = 10 mm à h = 80 mm), pour trois coefficients de vitesse k (0,1, 0,5 et 0,7), pour deux diamètres de la buse DB (DB=3mm pour les figures 5 et DB=6mm pour les figures 6).

On observe ici encore l'effet quadratique de la puissance, avec une puissance optimale qui croît avec l'épaisseur de la pièce et diminue avec la vitesse de découpe.

Les courbes des figures 5 et 6 sont tracées sans tenir compte de la contrainte nécessitant 1 kW de puissance par centimètre d'épaisseur de pièce à découper. Leur domaine de validité doit donc être réduit et la limite de ce domaine est donnée par la courbe noire qui en représente la borne supérieure. Celle-ci est tracée en joignant les points des courbes a à h dont l'abscisse correspondant à la puissance minimale nécessaire pour découper (courbe a : e = 10 mm, P = 1 kW ; courbe b : e = 20 mm, P = 2 kW). Les segments situés au-dessus de ce domaine ne sont donc pas valides car il n'y a pas de découpe.

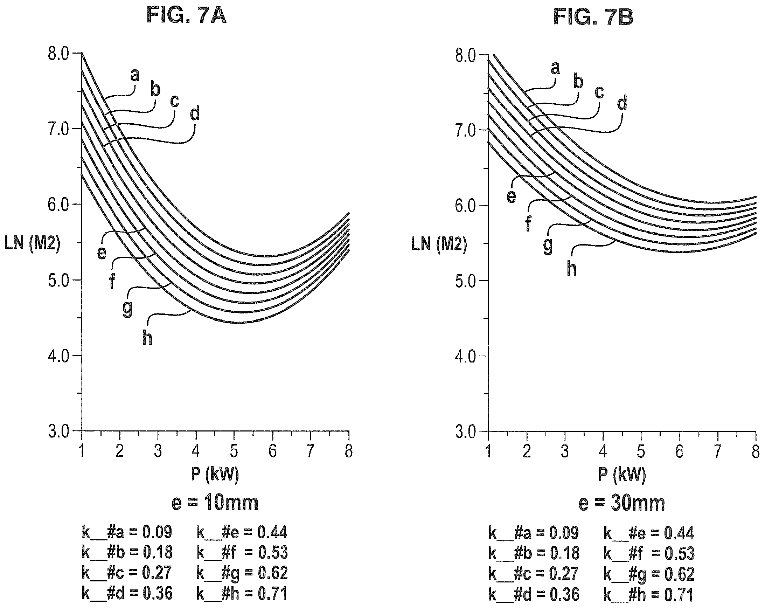

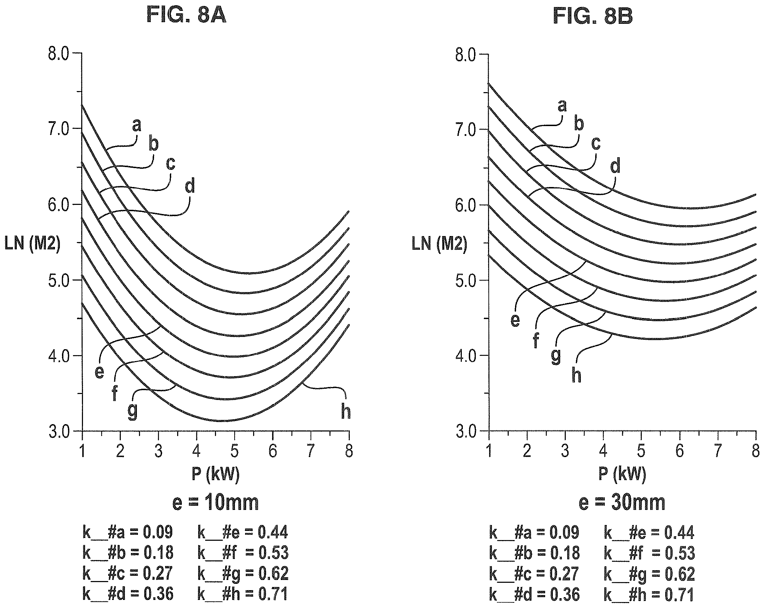

Les figures 7 et les figures 8 montrent des courbes représentant l'évolution de la quantité d'aérosols produits (exprimé par le logarithme LN de la masse surfacique M2 d'aérosols produits (en ordonnée)) en fonction de l'interaction entre la puissance du faisceau 111 laser P (en abscisse) et le coefficient de vitesse k, pour deux épaisseurs de la pièce 10 mm et 30 mm et pour deux diamètres de la buse DB (DB=3mm pour les figures 7 et DB=6mm pour les figures 8).

Les figures 7 et les figures 8 permettent de visualiser le déplacement de la puissance optimale en fonction du coefficient de vitesse, et ce pour une épaisseur de pièce donnée. Pour l'épaisseur de 30 mm, la puissance minimale est de 3 kW pour que la découpe ait lieu, l'échelle de l'axe des abscisses varie donc de 3 à 8 kW.

L'étude des courbes des figures 3 à 8 montre que pour diminuer la quantité d'aérosols produits, il faut choisir le coefficient de vitesse le plus élevé. A ce coefficient correspond une puissance optimale dépendant de l'épaisseur de la pièce à découper. Ces observations sont valables pour les deux buses, mais la quantité d'aérosols est moindre avec la buse de 6 mm. Rappelons qu'utiliser la buse de 3 mm est une contrainte pour les fortes épaisseurs.

Les figures 9 montrent de nouveau des courbes représentant l'évolution de la quantité d'aérosols produits (exprimé par le logarithme LN de la masse surfacique M2 d'aérosols produits (en ordonnée)) en fonction de l'interaction entre la puissance du faisceau 111 laser P (en abscisse) et l'épaisseur de la pièce e pour des épaisseurs e variant de 40 à 80 mm (ce qui implique une puissance laser P supérieure à 4 kW), et ce pour deux coefficients de vitesse k (0,5 et 0,7). La courbe noire représente la borne supérieure du domaine de validité des courbes, pour tenir compte de la contrainte de 1 kW de puissance par cm d'épaisseur de pièce à découper.

Lors de l'étape S3, le calculateur 15 exprime la quantité d'aérosols 20 produits lors de chaque découpe d'essai de la pièce 1 en fonction de la puissance P du faisceau 111, de l'épaisseur e de la pièce 1 à découper, de la distance H, du coefficient k et du diamètre de buse DB du système 10.

Le calculateur 15 utilise une régression logarithmique à partir des mesures de l'étape S2 pour donner le meilleur modèle. Dans notre exemple et avec les mesures du tableau 3, l'équation (E1) est exprimée de la façon suivante :

$$\begin{aligned} M_2 = \exp[&5{,}386 - 0{,}208.(DB - 4{,}45) + 0{,}039.(e - 25{,}2) - 0{,}021.(H - 25{,}7) - 1{,}99.(k - 0{,}38) \\ &+ 0{,}033.(DB - 4{,}45).(P - 6{,}34) - 0{,}547.(DB - 4{,}45).(k - 0{,}38) - 0{,}016.(P - 6{,}34).(e - 25{,}2) \quad \text{(E1)} \\ &+ 0{,}257.(P - 6{,}34).(k - 0{,}38) + 0{,}115.(P - 6{,}34)^2]. \end{aligned}$$

Le coefficient de corrélation de (E1) par rapport aux mesures du tableau 3 est

$$R^2 = 0{,}9115.$$

On comprend que parmi les paramètres pris en compte dans (E1), on peut considérer que certains peuvent être posés comme des constantes, car en pratique, certaines valeurs ne varient pas lors des découpes en chantier. On peut ainsi poser par exemple

H = constante

pour simplifier les expressions.

L'équation (E2) correspondant à la dérivée partielle de l'expression de (E1) de la quantité d'aérosols 20 produits est ainsi

$$\frac{\partial}{\partial P}\ln M_2 = [0{,}033.(DB - 4{,}45) - 0{,}016.(e - 25{,}2) + 0{,}257.(k - 0{,}38) \quad \text{(E2)}$$
$$+ 0{,}230.(P - 6{,}34)]$$

Le calculateur 15 détermine ensuite l'expression permettant d'annuler ladite dérivée partielle, en fonction de la pièce 1 à découper, des paramètres de découpe et du type de système 10.

En posant :

$$\frac{\partial}{\partial P}\ln M_2 = 0$$

le calculateur 15 trouve

$$Popt = -0{,}14 \cdot DB + 0{,}07 \cdot e - 1{,}12 \cdot k + 5{,}64 \quad \text{(E3)}$$

Ainsi, pour un système 10 comportant une source 11 laser du type grenat d'yttrium-aluminium YAG, par exemple à disque, pouvant produire pour un faisceau 111 laser ayant une longueur d'onde de l'ordre de 1 $\mu$m (par exemple 1,03 $\mu$m), on définit un quadruplet prédéterminé de constantes

($\alpha$ ; $\beta$ ; $\gamma$ ; $\delta$)

représentatif du type de système 10 de découpe, tel que :

$$Popt = \alpha \cdot DB + \beta \cdot e + \gamma \cdot k + \delta$$

où DB est le diamètre de la buse 13, en millimètres,

e est l'épaisseur de la pièce 1, en millimètres, et

k est le coefficient de vitesse limite de la tête 12 de découpe, à savoir le rapport entre la vitesse courante de découpe et la vitesse limite de découpe de la pièce 1, tel que :

(-0,14 ; 0,07 ; -1,12, 5,64).

Ainsi l'étape S5 de détermination de la puissance Pd de découpe est de préférence la puissance Popt, qui minimise la quantité d'aérosols 20 produits lors d'une découpe de la pièce 1, tout en veillant à ce que la puissance Pd soit au moins égale à la puissance de découpe (on rappelle qu'il est nécessaire, pour qu'il y ait découpe, de disposer d'environ 1 kW pour chaque cm d'épaisseur de la pièce).

On peut donc définir une puissance minimale Pmin égale à $\lambda$e, telle que $\lambda$ est un coefficient directeur représentant le nombre de kW nécessaires pour la découpe de la pièce par mm d'épaisseur de pièce 1 (dans notre exemple 0,1), et e est l'épaisseur de la pièce, en mm.

Si Popt est telle que

$$Popt < (\lambda e = Pmin)$$

alors $\lambda$e sera pris pour Pd.

En revanche, si Popt est telle que

$$Popt > (\lambda e = Pmin)$$

alors Popt sera pris pour Pd.

EXEMPLE D'APPLICATION

Pour un diamètre de buse DB de 3 mm, et un coefficient k de 0,5, et si l'on souhaite découper une pièce d'une épaisseur e de 40 mm, la puissance optimale Popt du faisceau 111 est de 7,46 kW, soit sensiblement 7,5 kW.

Si, pour un même diamètre de buse DB, on cherche à découper la même pièce 1 avec un coefficient k de 0,7, alors la puissance optimale Popt du faisceau 111 est de 7,24 kW, soit sensiblement 7,25 kW.

On constate que si l'on souhaite découper une pièce d'une épaisseur e de 50 mm, avec un coefficient k de 0,5, alors la puissance Popt est de 8,16 kW. En général, le type de source 11 précitée a une puissance maximale de 8 kW. On pourra alors dans ce cas

- soit appliquer la puissance maximale de 8kW pour la découpe ;
- soit effectuer la découpe avec un système ayant une source 11 ayant une puissance maximale supérieure à 8kW.

**Revendications**

1.  Procédé optimisé de découpe par laser d'une pièce (1) d'un matériau par un système (10) de découpe comportant

    - une source (11) laser de production d'un faisceau (111) laser avec une puissance, et
    - une tête (12) de découpe comportant une buse (13) extrémale de passage du faisceau (111) laser de découpe,
    le procédé étant **caractérisé en ce qu'**il comporte une étape (S5) de détermination d'une puissance Pd de découpe telle que

$$Pd = Max(Popt; \lambda e)$$

    où Max est l'opérateur mathématique du maximum,
    Popt est une puissance optimale du faisceau (111) laser du système (10) de découpe, déterminée en fonction de la pièce (1) à découper, et/ou
    de paramètres de découpe et/ou
    du type de système (10),
    pour minimiser la quantité d'aérosols (20) produits lors d'une découpe de la pièce (1),
    $\lambda$ est un coefficient directeur représentant le nombre de kW nécessaires pour la découpe de la pièce par mm d'épaisseur de pièce (1), et
    e est l'épaisseur de la pièce, en mm.

2.  Procédé selon la revendication 1, dans lequel la détermination de Popt est effectuée grâce à un quadruplet prédéterminé de constantes ($\alpha$ ; $\beta$ ; $\gamma$ ; $\delta$) représentatif du type de système (10) de découpe, tel que :

$$Popt = \alpha \cdot DB + \beta \cdot e + \gamma \cdot k + \delta$$

    où DB est le diamètre de la buse (13), en millimètres,
    e est l'épaisseur de la pièce (1), en millimètres, et
    k est le coefficient de vitesse limite de la tête (12) de découpe, à savoir le rapport entre la vitesse courante de découpe et la vitesse limite de découpe de la pièce (1).

3.  Procédé selon la revendication 2, dans lequel dans lequel le quadruplet prédéterminé de constantes ($\alpha$ ; $\beta$ ; $\gamma$ ; $\delta$), représentatif d'un système (10) de découpe comportant une source (11) laser du type grenat d'yttrium-aluminium YAG pour un faisceau (111) laser ayant une longueur d'onde de l'ordre de 1 $\mu$m, est (-0,14 ; 0,07 ; -1,12, 5,64).

**4.** Procédé selon l'une des revendications 1 à 3, comportant une étape initiale de détermination d'une expression de la puissance du faisceau laser en fonction de la pièce (1) à découper, et/ou de paramètres de découpe, et/ou du type de système (10), étape initiale selon laquelle :

- le système (10) effectue (S1) une pluralité de découpes d'essai d'une pièce (1) en faisant varier la puissance du faisceau (111), et/ou la pièce (1) à découper, et/ou des paramètres de découpe et/ou le type de système (10) ;
- un capteur (14) effectue une pluralité de mesures (S2) correspondantes de la quantité d'aérosols (20) produits lors de chaque découpe d'essai de la pièce (1),
- un calculateur (15)

exprime (S3) la quantité d'aérosols (20) produits lors de chaque découpe d'essai de la pièce (1) en fonction de la puissance du faisceau (111), et/ou de la pièce (1) à découper, et/ou des paramètres de découpe et/ou du type de système (10) ;
effectue une dérivée partielle (S4) de l'expression de la quantité d'aérosols (20) produits, par rapport à la puissance du faisceau laser, et détermine (S4) l'expression permettant d'annuler ladite dérivée partielle en fonction de la pièce (1) à découper, et/ou des paramètres de découpe et/ou le type de système (10).

**Patentansprüche**

**1.** Optimiertes Laserschneidverfahren eines Teils (1) aus einem Werkstoff durch ein Schneidsystem (10), aufweisend

- eine Laserquelle (11) für die Produktion eines Laserstrahls (111) mit einer Leistung, und
- einen Schneidkopf (12), aufweisend eine Enddüse (13) für den Durchgang des Schneidlaserstrahls (111),
wobei das Verfahren **dadurch gekennzeichnet ist, dass** es einen Schritt (S5) für die Bestimmung einer Schneidleistung Pd derart aufweist, dass

$$Pd = Max(Popt; \lambda e)$$

wobei Max der mathematische Operator des Maximums ist,
Popt eine optimale Leistung des Laserstrahls (111) des Schneidsystems (10) ist, bestimmt in Abhängigkeit von
dem zu schneidenden Teil (1), und/oder
Schneidparametern und/oder
dem Typ des Systems (10),
um die Menge an Aerosolen (20), die bei einem Schneiden des Teils (1) produziert werden, zu minimieren,
$\lambda$ eine Kurve ist, die die Anzahl von kW darstellt, die für das Schneiden des Teils je mm Dicke des Teils (1) notwendig sind, und
e die Dicke des Teils in mm ist.

**2.** Verfahren nach Anspruch 1, wobei die Bestimmung von Popt dank einem vorher festgelegten Quadrupel von Konstanten ($\alpha$; $\beta$; $\gamma$; $\delta$) erfolgt, das für den Typ des Schneidsystems (10) derart repräsentativ sind, dass:

$$Popt = \alpha \cdot DB + \beta \cdot e + \gamma \cdot k + \delta$$

wobei DB der Durchmesser der Düse (13) in Millimetern ist,
e die Dicke des Teils (1) in Millimetern ist, und
k der Koeffizient der Grenzgeschwindigkeit des Schneidkopfs (12), nämlich das Verhältnis zwischen der laufenden Schneidgeschwindigkeit und der Grenzschneidgeschwindigkeit des Teils (1), ist.

**3.** Verfahren nach Anspruch 2, wobei das vorher festgelegte Quadrupel von Konstanten ($\alpha$; $\beta$; $\gamma$; $\delta$), das für ein Schneidsystem (10) repräsentativ ist, aufweisend eine Laserquelle (11) vom Typ Yttrium-Aluminium-Granat YAG für einen Laserstrahl (111) mit einer Wellenlänge von zirka 1 $\mu$m, ist
(-0,14; 0,07; -1,12, 5,64) .

**4.** Verfahren nach einem der Ansprüche 1 bis 3, aufweisend einen Anfangsschritt des Bestimmens eines Ausdrucks der Leistung des Laserstrahls in Abhängigkeit von dem zu schneidenden Teil (1) und/oder von Schneidparametern und/oder vom Typ des Systems (10), wobei gemäß dem Anfangsschritt:

- das System (10) eine Vielzahl von Testschnitten eines Teils (1) durch Variieren der Leistung des Strahls (111) und/oder des zu schneidenden Teils (1) und/oder der Schneidparameter und/oder des Typs des Systems (10) durchführt (S1);
- ein Sensor (14) eine Vielzahl entsprechender Messungen der Menge an Aerosolen (20) durchführt (S2), die bei jedem Testschnitt des Teils (1) produziert werden,
- ein Rechner (15)

die Menge an Aerosolen (20) ausdrückt (S3), die bei jedem Testschnitt des Teils (1) in Abhängigkeit von der Leistung des Strahls (111) und/oder dem zu schneidenden Teil (1) und/oder den Schneidparametern und/oder dem Typ des Systems (10) produziert werden;
eine partielle Ableitung (S4) des Ausdrucks der Menge an Aerosolen (20) durchführt (S4), die in Bezug auf die Leistung des Lasers produziert werden und den Ausdruck bestimmt, der erlaubt, die partielle Ableitung in Abhängigkeit von dem zu schneidenden Teil (1) und/oder den Schneidparametern und/oder dem Typ des Systems (10) zu annullieren.

**Claims**

**1.** An optimised laser cutting method of a piece (1) from a material by a cutting system (10) comprising

- a laser source (11) for producing a laser beam (111) having a power, and
- a cutting head (12) comprising an end nozzle (13) for the passage of the cutting laser beam (111),
wherein the method is **characterized in that** it comprises a step (S5) of determining a cutting power Pd such that

$$Pd = Max(Popt; \lambda e)$$

where Max is the mathematical operator of the maximum,
Popt is an optimal power of the laser beam (111) of the cutting system (10), which is determined in accordance with of the piece (1) to be cut out, and/or
with cutting parameters and/or
with the type of system (10),
in order to minimize the amount of aerosols (20) produced when the piece (1) is being cut out,
$\lambda$ is a leading coefficient representing the number of kW required for cutting out the piece per mm of thickness of the piece (1), and
e is the thickness of the part, in mm.

**2.** The method according to claim 1, wherein the determination of Popt is carried out using a predetermined quadruplet of constants $(\alpha; \beta; \gamma; \delta)$ representative of the type of cutting system (10), such that:

$$Popt = \alpha \cdot DB + \beta \cdot e + \gamma \cdot k + \delta$$

where DB is the diameter of the nozzle (13), in millimetres,
e is the thickness of the piece (1), in millimetres, and
k is the limit speed coefficient of the cutting head (12), namely the ratio between the standard cutting speed and the limit cutting speed of the part (1).

**3.** The method according to claim 2, wherein the predetermined quadruplet of constants $(\alpha; \beta; \gamma; \delta)$, representative of a cutting system (10) comprising a laser source (11) of the yttrium aluminium garnet YAG type for a laser beam (111) having a wavelength of the order of 1 $\mu$m, is
(-0.14; 0.07; -1.12, 5.64).

4. The method according to one of claims 1 to 3, comprising an initial step of determining an expression of the power of the laser beam in accordance with the piece (1) to be cut out, and/or with cutting parameters, and/or with the type of system (10), initial step according to which:

- the system (10) performs (S1) a plurality of test cuttings of a piece (1) while varying the power of the beam (111), and/or the piece (1) to be cut out, and/or the cutting parameters and/or the type of system (10) ;
- a sensor (14) performs a plurality of corresponding measurements (S2) of the amount of aerosols (20) produced during each test cutting of the piece (1),
- a computer (15)

expresses (S3) the amount of aerosols (20) produced during each test cutting of the piece (1) in accordance with the power of the beam (111), and/or with the piece (1) to be cut out, and/or with cutting parameters and/or with the type of system (10);

performs a partial derivative (S4) of the expression of the amount of aerosols (20) produced, with respect to the power of the laser beam, and determines (S4) the expression making it possible to cancel out said partial derivative in accordance with the piece (1) to be cut out, and/or with cutting parameters and/or with the type of system (10).

**FIG. 1**

EP 2 635 396 B1

# FIG. 2

```
┌─────────────────┐
│       S1        │
└─────────────────┘
         │
         ▼
┌─────────────────┐
│       S2        │
└─────────────────┘
         │
         ▼
┌─────────────────┐
│       S3        │
└─────────────────┘
         │
         ▼
┌─────────────────┐
│       S4        │
└─────────────────┘
         │
         ▼
┌─────────────────┐
│       S5        │
└─────────────────┘
```

# FIG. 3A

LN (M2)

P (kW)

**K = 0,1**

DB_#a = 3.00
DB_#b = 6.00

# FIG. 3B

LN (M2)

P (kW)

**K = 0,5**

DB_#a = 3.00
DB_#b = 6.00

# FIG. 3C

LN (M2)

P (kW)

**K = 0,7**

DB_#a = 3.00
DB_#b = 6.00

EP 2 635 396 B1

FIG. 4A

FIG. 4B

FIG. 4C

LN (M2)

a

b

P (kW)

K = 0,1

DB_#a = 3.00
DB_#b = 6.00

LN (M2)

a

b

P (kW)

K = 0,5

DB_#a = 3.00
DB_#b = 6.00

LN (M2)

a

b

P (kW)

K = 0,7

DB_#a = 3.00
DB_#b = 6.00

EP 2 635 396 B1

K = 0,1

| e__#a = 10.00 | e__#e = 50.00 |
|---|---|
| e__#b = 20.00 | e__#f = 60.00 |
| e__#c = 30.00 | e__#g = 70.00 |
| e__#d = 40.00 | e__#h = 80.00 |

K = 0,5

| e__#a = 10.00 | e__#e = 50.00 |
|---|---|
| e__#b = 20.00 | e__#f = 60.00 |
| e__#c = 30.00 | e__#g = 70.00 |
| e__#d = 40.00 | e__#h = 80.00 |

K = 0,7

| e__#a = 10.00 | e__#e = 50.00 |
|---|---|
| e__#b = 20.00 | e__#f = 60.00 |
| e__#c = 30.00 | e__#g = 70.00 |
| e__#d = 40.00 | e__#h = 80.00 |

EP 2 635 396 B1

FIG. 6A

FIG. 6B

FIG. 6C

FIG. 7A

LN (M2)

a b c d

e f g h

P (kW)

e = 10mm

k__#a = 0.09  k__#e = 0.44
k__#b = 0.18  k__#f = 0.53
k__#c = 0.27  k__#g = 0.62
k__#d = 0.36  k__#h = 0.71

FIG. 7B

LN (M2)

a b c d

e f g h

P (kW)

e = 30mm

k__#a = 0.09  k__#e = 0.44
k__#b = 0.18  k__#f = 0.53
k__#c = 0.27  k__#g = 0.62
k__#d = 0.36  k__#h = 0.71

## FIG. 8A

e = 10mm

k__#a = 0.09   k__#e = 0.44
k__#b = 0.18   k__#f = 0.53
k__#c = 0.27   k__#g = 0.62
k__#d = 0.36   k__#h = 0.71

## FIG. 8B

e = 30mm

k__#a = 0.09   k__#e = 0.44
k__#b = 0.18   k__#f = 0.53
k__#c = 0.27   k__#g = 0.62
k__#d = 0.36   k__#h = 0.71

## FIG. 9A

LN (M2)

Limite du
domaine de validité
de la découpe

e
d
c
a
b

P (kW)

K = 0,5

e__#a = 40.00   e__#d = 70.00
e__#b = 50.00   e__#e = 80.00
e__#c = 60.00

## FIG. 9B

LN (M2)

Limite du
domaine de validité
de la découpe

e
d
c
a
b

P (kW)

K = 0,7

e__#a = 40.00   e__#d = 70.00
e__#b = 50.00   e__#e = 80.00
e__#c = 60.00

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Modularised laser beam cutting technology for dismantling applications. international Institue of Welding, 2007, vol. 51

- EFFECTS OF THE ENERGY AND GAS-HYDRODYNAMIC PARAMETERS OF THE LASER CUTTING PROCESS ON THE FORMATION OF CUT SURFACES. Taylor & Francis, Janvier 2006, vol. 20